# EUROPEAN PATENT SPECIFICATION

(11) **EP 2 162 238 B1**
(45) Date of publication and mention of the grant of the patent: **19.03.2014**
(21) Application number: 08775500.5
(22) Date of filing: 19.06.2008
(51) Int. Cl.: B05D 7/08, B27K 3/15

(54) **SURFACE TREATMENT OF THERMALLY MODIFIED WOOD**
OBERFLÄCHENBEHANDLUNG VON WÄRMEMODIFIZIERTEM HOLZ
TRAITEMENT DE SURFACE DE BOIS MODIFIÉ THERMIQUEMENT

(30) Priority: 19.06.2007 FI 20070487
(43) Date of publication of application: 17.03.2010
(73) Proprietor: Stora Enso Oyj, 00101 Helsinki (FI)
(72) Inventor: PYNNÖNEN, Janne, FI-33470 Ylöjärvi (FI); KANKKUNEN, Mika, FI-55510 Imatra (FI); PÄNKÄLÄINEN, Saku, FI-53920 Lappeenranta (FI); SILEN, Jouko, FI-11120 Riihimäki (FI); LAITINEN, Risto, FI-55420 Imatra (FI); LINDELL, Henry, FI-55800 Imatra (FI)
(74) Representative: Berggren Oy Ab
(86) International application number: PCT/FI2008/050375
(87) International publication number: WO 2008/155466

(56) References cited:
- WO-A-02/074507
- GB-A- 2 044 312
- US-A- 3 832 316

## Description

The invention relates to a method for treating thermally modified wood, the purpose of said method being to protect wood surface against the effects of weather. The invention also relates to thermally modified wood that is treated according to the method and the use of protective agents for protecting thermally modified wood against weather effects.

Thermal modification of wood means controlled thermal treatment of timber at a temperature higher than 100°C, which treatment improves the dimension stability of wood and reduces its equilibrium moisture content and moisture instability. Other advantageous effects of thermal modification are an increased resistance to rot and a reduced secretion of resin. On the other hand, the color of thermally modified wood turns darker, and its bending and splitting strengths are weakened. Owing to its properties, thermally modified wood is used particularly in structures and furniture that is exposed to open-air conditions.

The technique of the thermal modification of wood is described in the publication WO 95/31680, the essential substance being the controlling of the temperature difference between the external surface of the wood and the internal part thereof during a lifting operation, so that any cracks created in the wood are prevented. According to the publication, said temperature difference is within the range 10-30°C, and it is maintained roughly constant during the heating process. According to the publication, a respective controlled temperature difference of 10-30°C between the internal part and the external surface of the wood can also be maintained when cooling the wood, in which case - as opposite to the heating process - the temperature prevailing inside the wood is higher than temperature on the surface.

The publication WO 94/27102 introduces an improved manufacturing method for thermally modified wood, in which method the processing temperature is over 150°C, and water vapor is used in the treatment. During the treatment, a weight loss of at least 3% takes place in the wood.

The publication WO 01/53812 further describes a method for recognizing the modification degree of a thermally modified piece of wood by measuring the number of free radicals contained therein and by comparing the obtained number with that of a corresponding untreated piece of wood. The suggested criterion for thermal modification in said publication is that the number of free radicals contained in the piece of wood were multiplied by at least 1.5, and preferably doubled, in comparison with untreated wood.

By way of this reference, said publications WO 95/31680, WO 94/27102 and WO 01/53812 are included as part of the present specification. In the specification below, the concepts 'thermal modification of wood' or 'thermally modified wood' (thermowood) refer to a case where the wood in question fulfils the criteria of the thermal treatment of wood (thermal modification) or thermally modified wood, as defined in at least one of said three publications.

Although thermal modification reduces the equilibrium moisture content of wood in humid open air, wood in any case absorbs large amounts of water when getting into direct contact with water or with humid ground. Particularly long-term waterlogging decays wood irrespective of thermal modification, and the soaking of wood material also largely increases its weight.

The publication WO02/081159 describes the treatment of thermally modified wood with alkyl amine derivatives, the purpose of said treatment being to protect wood against degrading micro-organisms. In addition, said publication mentions wax dispersions, oils and silicone derivatives as agents that make thermowood better water-repellent.

The publication WO2005/009700 suggests a solution for preventing the water-logging of thermally modified wood; this solution is based on treating wood with a hydrophobic adhesive that is reactive with cellulose, such as alkyl ketene dimer (AKD) or alkenyl succinic acid anhydrid (ASA). In the treatments described in said publication, wood was thoroughly impregnated with an adhesive-bearing solution and dried by evaporating the acetone that was used as the solvent substance. An increased hydrophobic quality of the wood was verified by a drop test that measures the angle between a water droplet set on the wood surface and the wood surface during a contact with a duration of 1-10 seconds.

Known AKD or ASA adhesion methods of thermally modified wood are characterized in that the adhesive substances require the use of an organic solvent, such as acetone. Organic solvents are, however, relatively expensive, and their toxicity or sensitivity to ignition may present a risk of occupational hazards. It would be desirable that in the wood treatment solution, they could be replaced by water.

Moreover, AKD and ASA do not eliminate the tendency to cracking, which is typical of wood owing to the reduced bending and splitting strength of thermally modified wood.

Yet another problem with thermally modified wood is that owing to the effects of weather, the originally deep brown color of wood gradually changes into gray in the open air. This is a remarkable drawback for instance in garden furniture, which is a typical target for using thermally modified wood. The obvious reason for turning gray is that lignin is degraded and washed away in the wood surface layers that are exposed to the effects of weather. The only effective way to prevent wood from loosing color has been painting with a pigment-containing paint. In that case, however, the natural appearance of wood with its grains, streaks and growth rings is lost.

An arrangement according to the invention, by which the above mentioned problems, particularly connected to the use of solvent and to the cracking of wood can be eliminated, is that the wood is treated with a liquid resin-based protective agent that is dried and/or hardened so that for the wood, there is obtained a transparent protective surface made of thermosetting plastic.

In the present invention, the term thermosetting plastics refers to cross-linked polymers that can be formed, apart from using heat, also in the ambient temperature, for instance in room temperature, due to the effect of a catalyst, i.e. without additional heating. The decisive factor that distinguishes the thermosetting plastics from regular thermoplastics is their hardness resulting from their cross-linking structure, wherefore they are not softened in heat and cannot be molded afterwards.

The thermosetting plastics that can be used in connection with the present invention are particularly phenol formaldehyde resins, melamine formaldehyde resins and urea formaldehyde resins, which can be spread or impregnated on thermally modified wood as aqueous solutions. Thus the use of organic solvents in the protection of thermowood can be avoided. After application, the water serving as the solvent is removed by evaporation, possibly by means of heating for instance in the temperature range 130-160°C, and when necessary, catalysts can be included in the solution for curing the resin. UV irradiation can also be used in the curing process.

The spreading or impregnation of the solution can be carried out either without pressure or with pressure, in which case in the first mentioned situation the impregnation depth of the solution in the wood can be 1-2 mm, whereas in the latter case, the solution can be impregnated throughout even in thicker wood elements. The solution can be applied on wood by brushing, injecting, spraying, dipping or by a lengthy immersion. The quantity of the resin applied on the wood can be 10-400 g/m², advantageously 10-150 g/m², preferably 30-100 g/m² and most advantageously about 50g/m², when calculated as hardened from dry matter. The toughening and crack-reducing effect of thermosetting plastic on thermally modified wood is apparently based on the strong cross-linking feature of thermosetting plastic, wherefore the hardened, slightly ductile, essentially unbreakable plastic does not only cover the wood fibers with a protective film, but also binds adjacent fibers in a uniform, integrated structure.

According to the invention it has been found out that also the above mentioned problem related to the graying of thermally modified wood can be solved by using thermosetting plastic, and particularly phenol formaldehyde resin, as the wood protective agent. According to the invention, thermowood treated with phenol formaldehyde resin has in a year-long test, in conditions corresponding to open air, under regularly alternating rain and sunshine, maintained its original brown shade, whereas untreated thermowood and also thermowood treated with AKD or ASA have under the same conditions turned remarkably gray. A partial reason for the good preservation of color can be the brown color typical of phenol formaldehyde resin, which more or less corresponds to the natural brown color of thermowood. It is, however, presumed that there are other factors, too, but because they are not yet known, there is no reason to further speculations here.

Thermally modified wood according to the invention, which is manufactured in the above described process, is characterized in that on the wood, there is applied thermosetting plastic, which forms a transparent protective surface that protects the wood against the effects of weather. Thermosetting plastic can be applied only on the surface layer of wood, or it can be absorbed throughout in the wood. The protective thermosetting plastic can be phenol formaldehyde resin, melamine formaldehyde resin or urea formaldehyde resin. Particularly when using phenol formaldehyde resin, a further typical feature of the wood is that it preserves its original brown shade mainly unchanged in the open air.

The invention further relates to the use of thermosetting plastic, such as phenol, melamine or urea formaldehyde resin, as the transparent protective surface for protecting thermally modified wood against the effects of weather. Thermosetting plastics can be used for reducing water absorption in the wood and for preventing the wood from cracking. Moreover, particularly phenol formaldehyde resin is feasible for preventing thermowood from turning gray in the open air.

Practical applications of the invention further include the use of cross-linking resin as a protective agent to be applied on thermally modified wood as an aqueous solution, which solution then is dried and hardened as a transparent protective surface made of thermosetting plastic.

The invention is described in more detail with reference to the appended practical examples.

### Example 1

Commercial thermally modified wood marketed under the name ThermoWood was cut into pieces of 100 mm x 50 mm x 20 mm, and the 20 mm wide side edges and ends of the pieces were covered with paraffin wax, so that the opposite 100 mm x 50 mm surfaces of the pieces, which surfaces were in parallel with the wood grains, were left without the wax cover. The treatment solutions were prepared by diluting commercial phenol formaldehyde resin Prefere 72 6410M (Dynea Finland Oy) with water with the volume ratio 1:1, and by diluting commercial melamine formaldehyde resin Prefere 70 0502L (Dynea Finland Oy) with water, the dilution ratio being 2:1. Two sample pieces (MF) were immersed for various lengths of time in the melamine formaldehyde resin solution, and two sample pieces (PF) were immersed for various lengths of time in the phenol formaldehyde resin solution. After the impregnation treatment, the sample pieces were dried by evaporating water and hardened with heat at 130-150°C. The quantity of resin impregnated in the sample pieces was defined in proportion to the free surface of the pieces that was not coated by wax. Resin was not impregnated in the fifth sample piece that represented the reference sample.

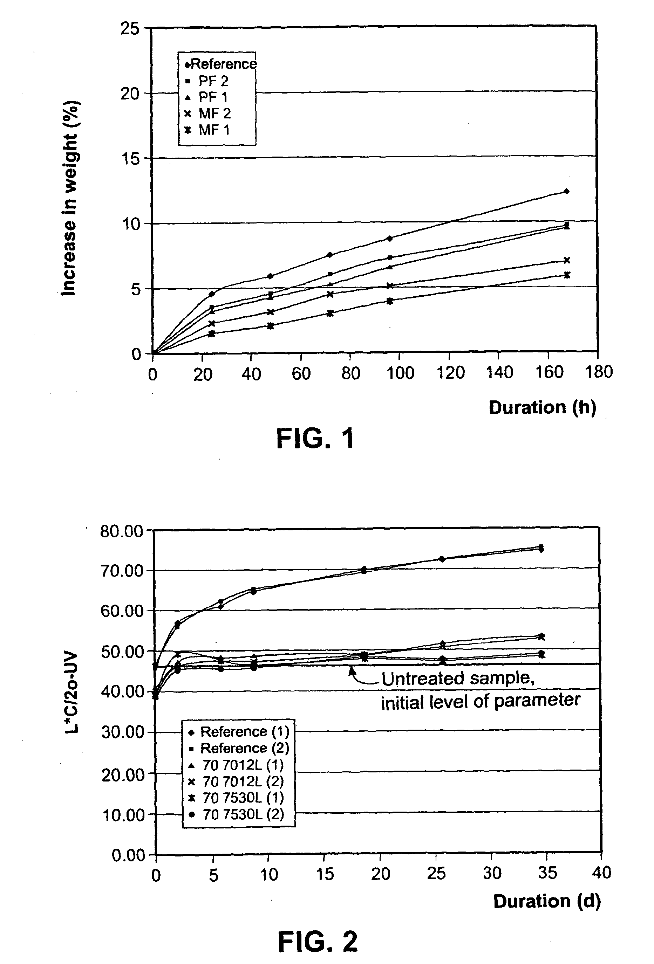

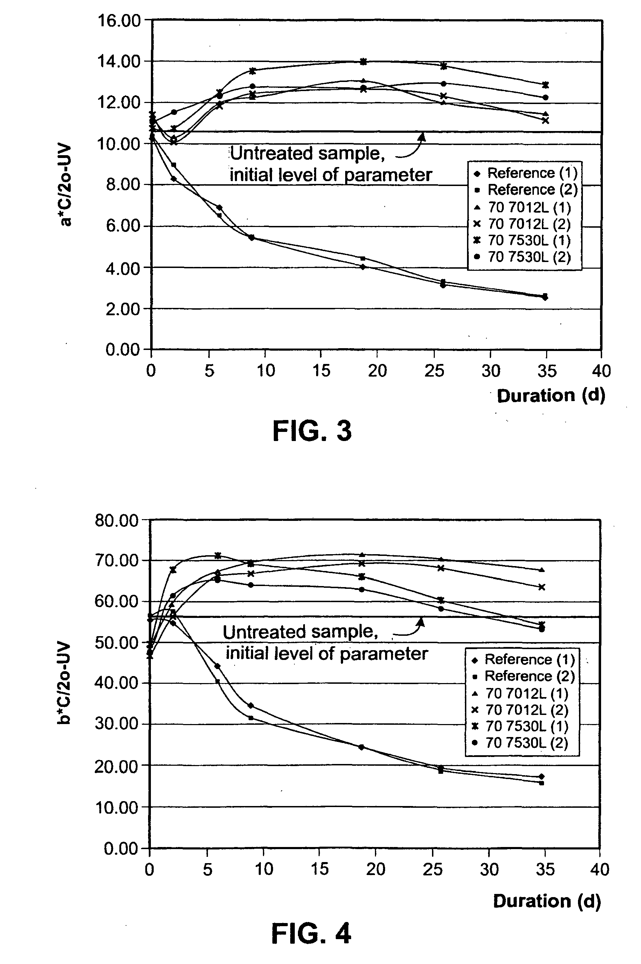

The absorption of water in the resin in the treated sample pieces and in the reference sample was studied in a floating test, where the pieces were allowed to freely float in water. The sample pieces were weighted after floating for 1, 2, 3, 4 and 7 days. The weighting results are represented in the following Table 1, where the quantity of resin solution absorbed by each sample also is given, and the results are illustrated graphically in the appended Figure 1, where each curve represents the increase in percentages of the weight of the sample as a function of time. It can be seen that the samples (MF; PF) treated with melamine and phenol formaldehyde resins according to the invention absorbed essentially less water than the untreated reference sample.

**Table 1**

| | **Increase in weight (%)** | | | | | |
|---|---|---|---|---|---|---|
| **Sample** | **0 h** | **24 h** | **48 h** | **72 h** | **96 h** | **108 h** |
| MF 1 (200 g/m²) | 0 | 1.5 | 2.1 | 3.0 | 4.0 | 5.9 |
| MF 2 (40 g/m²) | 0 | 2.3 | 3.2 | 4.5 | 5.1 | 7.0 |
| PF 1 (130 g/m²) | 0 | 3.2 | 4.3 | 5.3 | 6.6 | 9.7 |
| PF 2 (65 g/m²) | 0 | 3.4 | 4.4 | 6.0 | 7.2 | 9.6 |
| Reference (0) | 0 | 4.6 | 5.9 | 7.5 | 8.8 | 12.3 |

### Example 2

The same commercial thermowood as in Example 1 was cut into pieces that were treated by spraying them with an aqueous solution of phenol formaldehyde resin, whereafter the resin was dried and cured by heat at 130-150°C. The employed resins were commercial phenol formaldehyde resins Prefere 70 7012L and Prefere 70 7530L (Dynea Finland Oy), which were diluted with water with the volume ratio 1:1, and two thermowood samples were treated with each of said resins. The quantity of resin solution absorbed in the sample pieces during spraying was 80 g/m² (wet weight). Two samples were left untreated as reference samples.

The preservation or changing of the colors of the sample pieces was tested in simulated weather conditions according to the standard ISO5631. The samples were placed in a Q-Sun XE-3 Xenon test chamber, where the air temperature was 40°C. The weather conditions in the chamber were altered by repeating a two-hour cycle that first comprised 102 minutes of simulated sunshine with a light fixture having the power of 0.40 w/m², following with 18 minutes of irrigation. The duration of the test was 35 days, during which time the samples were measured for obtaining CIELAB parameters that describe color changes in the samples. Among these parameters, L*C/2° UV represents color lightness, a*C/2° UV represents the location of the color on the aniline pink (magenta)-green scale, and b*C/2° UV represents the location of the color on the blue-yellow scale. The results are given in the following Tables 2-4, and they are illustrated by the appended drawings 2-4, where the curve of each sample represents a change in the color parameter as a function of time. It is observed that in a 35-day test, samples treated with phenol formaldehyde resin according to the invention preserved their darkness and also their color shade close to the original shade of thermowood untreated with resin, whereas untreated reference samples were strongly bleached and also remarkably changed there color shade.

**Table 2**

| | **L*C/2° UV** | | | | | | |
|---|---|---|---|---|---|---|---|
| **Sample** | **0 d** | **2 d** | **6 d** | **9 d** | **19 d** | **26 d** | **35 d** |
| 70 7012 L (1) | 41.1 | 47.2 | 48.0 | 48.8 | 49.0 | 51.6 | 53.0 |
| 70 7012 L (2) | 39.9 | 46.4 | 47.8 | 47.4 | 49.0 | 50.8 | 52.8 |
| 70 7530 L (1) | 39.7 | 49.6 | 47.8 | 46.5 | 48.0 | 47.2 | 48.4 |
| 70 7530 L (2) | 38.9 | 45.3 | 45.7 | 45.8 | 48.5 | 47.7 | 48.7 |
| Reference (1) | 46.0 | 57.0 | 61.2 | 64.9 | 70.0 | 72.3 | 74.7 |
| Reference (2) | 46.8 | 56.2 | 62.4 | 65.4 | 65.2 | 72.6 | 75.1 |

**Table 3**

| | **a*C/2° UV** | | | | | | |
|---|---|---|---|---|---|---|---|
| **Sample** | **0 d** | **2 d** | **6 d** | **9 d** | **19 d** | **26 d** | **35 d** |
| 70 7012 L (1) | 11.2 | 10.1 | 11.9 | 12.3 | 13.0 | 12.1 | 11.4 |
| 70 7012 L (2) | 11.5 | 10.1 | 11.8 | 12.4 | 12.7 | 12.3 | 11.2 |
| 70 7530 L (1) | 10.8 | 10.7 | 12.4 | 13.5 | 14.0 | 13.8 | 12.9 |
| 70 7530 L (2) | 11.0 | 11.5 | 12.3 | 12.7 | 12.7 | 12.9 | 12.3 |
| Reference (1) | 10.6 | 8.3 | 6.9 | 5.5 | 4.1 | 3.2 | 2.5 |
| Reference (2) | 10.5 | 8.9 | 6.5 | 5.5 | 4.4 | 3.3 | 2.6 |

**Table 4**

| | **b*C/2° UV** | | | | | | |
|---|---|---|---|---|---|---|---|
| **Sample** | **0 d** | **2 d** | **6 d** | **9 d** | **19 d** | **26 d** | **35 d** |
| 70 7012 L (1) | 24.5 | 29.6 | 33.7 | 34.8 | 35.9 | 35.3 | 34.0 |
| 70 7012 L (2) | 23.0 | 28.3 | 33.2 | 33.5 | 34.8 | 34.2 | 31.8 |
| 70 7530 L (1) | 24.6 | 34.0 | 35.7 | 34.7 | 33.1 | 30.2 | 27.1 |
| 70 7530 L (2) | 23.9 | 30.8 | 32.8 | 32.1 | 31.6 | 29.2 | 26.7 |
| Reference (1) | 28.1 | 27.6 | 22.2 | 17.4 | 12.1 | 9.7 | 8.6 |
| Reference (2) | 28.3 | 28.9 | 20.3 | 15.9 | 12.2 | 9.4 | 7.9 |

## Claims

1. A method for treating thermally modified wood, which has been subjected to thermal treatment at a temperature higher than 100 °C, **characterized in that** on the thermally modified wood, there is applied a liquid resin-based protective agent, which is dried and/or cured, so that for the wood, there is obtained a transparent protective surface made of thermosetting plastic.

2. A method according to claim 1, **characterized in that** on the wood, there is spread or impregnated resin as an aqueous solution, whereafter the water is evaporated.

3. A method according to claim 2, **characterized in that** the drying of wood is carried out by means of heat.

4. A method according to claim 2 or 3, **characterized in that** a resin hardener is added in the solution.

5. A method according to any of the preceding claims, **characterized in that** the quantity of resin applied on wood is 10-400 g/m², preferably 10-150 g/m², and more preferably 30-100 g/m², as calculated from dry matter.

6. A method according to any of the preceding claims, **characterized in that** wood is protected with phenol formaldehyde resin, which in the open air preserves the appearance of the wood essentially unchanged.

7. A method according to any of the claims 1-5, **characterized in that** wood is protected with melamine formaldehyde resin or urea formaldehyde resin.

8. Thermally modified wood treated according to any of the preceding claims, **characterized in that** on the wood, there has been applied thermosetting plastic, which forms on the wood a transparent protective surface for protecting the wood against the effects of weather.

9. Thermally modified wood according to claim 8, **characterized in that** the protective surface is made of phenol formaldehyde resin, which in the open air preserves the appearance of the wood essentially unchanged.

10. Thermally modified wood according to claim 8, **characterized in that** the protective surface is made of melamine formaldehyde resin or urea formaldehyde resin.

11. The use of thermosetting plastic as a transparent protective surface for protecting thermally modified wood against the effects of weather.

12. The use of thermosetting plastic according to claim 11 as a protective surface reducing absorption of water in the wood.

13. The use of phenol formaldehyde resin according to claim 11 or 12 as the transparent protective surface that prevents wood from graying in the open air.

14. The use of melamine formaldehyde resin or urea formaldehyde resin according to claim 11 or 12 as the transparent protective surface for wood.

15. The use of cross-linking resin as a protective agent applied in an aqueous solution onto thermally modified wood and dried and cured to form a transparent protective surface of thermosetting plastic.

## Patentansprüche

1. Verfahren zur Behandlung von thermisch modifiziertem Holz, das bei einer Temperatur von mehr als 100°C wärmebehandelt worden ist, **dadurch gekennzeichnet, dass** auf das thermisch modifizierte Holz ein flüssiges harzbasiertes Schutzmittel aufgebracht wird, das getrocknet und/oder gehärtet wird, so dass bei dem Holz eine transparente, aus Duroplast hergestellte Schutzoberfläche erhalten wird.

2. Verfahren nach Anspruch 1, **dadurch gekennzeichnet, dass** bei dem Holz Harz als wässrige Lösung verteilt oder imprägniert wird.

3. Verfahren nach Anspruch 2, **dadurch gekennzeichnet, dass** das Trocknen des Holzes mittels Wärme erfolgt.

4. Verfahren nach Anspruch 2 oder 3, **dadurch gekennzeichnet, dass** zu der Lösung ein Harzhärter zugegeben ist.

5. Verfahren nach einem der vorhergehenden Ansprüche, **dadurch gekennzeichnet, dass** die auf Holz aufgebrachte Menge an Harz 10 bis 400 g/m² beträgt, vorzugsweise 10 bis 150 g/m², insbesondere 30 bis 100 g/m², berechnet aus Trokkenmasse.

6. Verfahren nach einem der vorhergehenden Ansprüche, **dadurch gekennzeichnet, dass** Holz mit Phenol-Formaldehyd-Harz geschützt wird, das an offener Luft das Aussehen des Holzes im Wesentlichen unverändert hält.

7. Verfahren nach einem der Ansprüche 1 bis 5, **dadurch gekennzeichnet, dass** Holz mit Melamin-Formaldehyd-Harz oder Harnstoff-Formaldehyd-Harz geschützt wird.

8. Thermisch modifiziertes Holz, das gemäß einem der vorhergehenden Ansprüche behandelt ist, **dadurch gekennzeichnet, dass** auf dem Holz ein Duroplast aufgebracht wurde, das auf dem Holz eine transparente Schutzoberfläche bildet, um das Holz vor Witterungseinflüssen zu schützen.

9. Thermisch modifiziertes Holz nach Anspruch 8, **dadurch gekennzeichnet, dass** die Schutzoberfläche aus Phenol-Form-aldehyd-Harz hergestellt ist, das an offener Luft das Aussehen des Holzes im Wesentlichen unverändert hält.

10. Thermisch modifiziertes Harz nach Anspruch 8, **dadurch gekennzeichnet, dass** die Schutzoberfläche aus Melamin-Form-aldehyd-Harz oder Harnstoff-Formaldehyd-Harz hergestellt ist.

11. Verwendung von Duroplast als transparente Schutzoberfläche zum Schutz von thermisch modifiziertem Holz vor Witterungseinflüssen.

12. Verwendung von Duroplast nach Anspruch 11 als Schutzoberfläche, um die Absorption von Wasser in dem Holz zu vermindern.

13. Verwendung von Phenol-Formaldehyd-Harz nach Anspruch 11 oder 12 als transparente Schutzoberfläche, das Holz vor Vergrauen in offener Luft schützt.

14. Verwendung von Melamin-Formaldehyd-Harz oder Harnstoff-Formaldehyd-Harz nach Anspruch 11 oder 12 als transparente Schutzoberfläche für Holz.

15. Verwendung von vernetzendem Harz als Schutzmittel, dass in wässriger Lösung auf thermisch modifiziertes Holz aufgebracht und getrocknet und gehärtet wird, um eine transparente Schutzoberfläche aus Duroplast zu bilden.

## Revendications

1. Procédé pour traiter thermiquement du bois modifié, qui a été soumis à un traitement thermique à une température supérieure à 100 °C, **caractérisé en ce que** sur le bois modifié thermiquement, est appliqué un agent protecteur à base de résine liquide, qui est séché et/ou traité, de sorte que pour le bois, il est obtenue une surface protectrice transparente faite de plastique thermodurcissable.

2. Procédé selon la revendication 1, **caractérisé en ce que** sur le bois, est étalée ou imprégnée une résine sous la forme d'une solution aqueuse, après quoi l'eau est évaporée.

3. Procédé selon la revendication 2, **caractérisé en ce que** le séchage du bois est réalisé au moyen de chaleur.

4. Procédé selon la revendication 2 ou 3, **caractérisé en ce qu'**un durcisseur de résine est ajouté dans la solution.

5. Procédé selon l'une quelconque des revendications précédentes, **caractérisé en ce que** la quantité de résine appliquée sur le bois est de 10 à 400 g/m², de préférence de 10 à 150 g/m², et plus préférablement de 30 à 100 g/m², calculée sur la base de la matière sèche.

6. Procédé selon l'une quelconque des revendications précédentes, **caractérisé en ce que** le bois est protégé avec une résine de phénol formaldéhyde, qui à l'air libre préserve l'aspect du bois qui reste essentiellement intact.

7. Procédé selon l'une quelconque des revendications 1 à 5, **caractérisé en ce que** le bois est protégé avec une résine de mélamine formaldéhyde ou une résine d'urée formaldéhyde.

8. Bois modifié thermiquement traité selon l'une quelconque des revendications précédentes, **caractérisé en ce que** sur le bois, a été appliqué un plastique thermodurcissable, qui forme sur le bois une surface protectrice transparente permettant de protéger le bois contre les effets météorologiques.

9. Bois modifié thermiquement selon la revendication 8, **caractérisé en ce que** la surface protectrice est faite de résine de phénol formaldéhyde, qui à l'air libre préserve l'aspect du bois qui reste essentiellement intact.

10. Bois modifié thermiquement selon la revendication 8, **caractérisé en ce que** la surface protectrice est faite de résine de mélamine formaldéhyde ou de résine d'urée formaldéhyde.

11. Utilisation de plastique thermodurcissable en tant que surface protectrice transparente permettant de protéger le bois modifié thermiquement contre les effets météorologiques.

12. Utilisation de plastique thermodurcissable selon la revendication 11 en tant que surface protectrice réduisant l'absorption de l'eau dans le bois.

13. Utilisation de résine de phénol formaldéhyde selon la revendication 11 ou 12 en tant que surface protectrice transparente qui empêche le bois de prendre une teinte grisée à l'air libre.

14. Utilisation de résine de mélamine formaldéhyde ou de résine d'urée formaldéhyde selon la revendication 11 ou 12 en tant que surface protectrice transparente pour le bois.

15. Utilisation de résine de réticulation en tant qu'agent protecteur appliqué dans une solution aqueuse sur du bois modifié thermiquement et séché et traité pour former une surface protectrice transparente de plastique thermodurcissable.
